Europäisches Patentamt

European Patent Office

Office européen des brevets

(19)

(11) EP 0 895 012 A1

(12) **DEMANDE DE BREVET EUROPEEN**

(43) Date de publication:
03.02.1999 Bulletin 1999/05

(51) Int Cl.6: **F16L 9/19, F16L 11/22**

(21) Numéro de dépôt: 98401884.6

(22) Date de dépôt: 24.07.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 29.07.1997 FR 9709650

(71) Demandeur: ELF ANTAR FRANCE
92400 Courbevoie (FR)

(72) Inventeur: **Lemaitre, Olivier**
**92200 Neuilly sur Seine (FR)**

(74) Mandataire: **Timoney, Ian Charles Craig**
**Elf Exploration Production**
**Département Propriété Industrielle**
**Tour Elf**
**EP/T/RD/DPI - Bureau 34 G 47**
**92078 Paris La Défense Cedex (FR)**

(54) **Canalisation comportant plusieurs conduits longitudinaux**

(57)     L'invention concerne une canalisation de transport de fluides et/ou d'énergies.

La canalisation selon l'invention comporte un corps (1) plein dans lequel sont aménagés plusieurs conduits (2) longitudinaux disposés côte à côte, caractérisée en ce que les axes (3) longitudinaux desdits conduits sont situés dans un plan et le corps (1) plein présente une section transversale extérieure en forme sensiblement d'un trapèze.

L'invention trouve son application notamment dans l'industrie, les travaux publics et de manière générale dans tous les secteurs de la distribution de produits liquides, gazeux et la distribution d'énergies.

FIG.1

## Description

### DOMAINE TECHNIQUE

La présente invention concerne une canalisation pour le transport séparé ou simultané de fluides liquides ou gazeux, d'énergies, et de produits pulvérulents, de manière permanente ou temporaire.

Une telle canalisation trouve son application notamment dans les industries chimiques, pétrolières, agro-alimentaires, l'agriculture ainsi que dans les secteurs des activités de la distribution de ces produits.

### ETAT DE LA TECHNIQUE ANTERIEURE

Les canalisations utilisées pour transporter des fluides ou de l'énergie, sont généralement de forme cylindrique à section circulaire. Lorsqu'elles sont posées sur le sol ces canalisations constituent des obstacles à la circulation des véhicules et des personnes et sont par conséquent sources d'accidents, d'autant plus graves que les produits ou les énergies transportés sont dangereux.

C'est le cas notamment des canalisations mises en place pour le ravitaillement en carburant des aéronefs, en stationnement sur les aéroports pendant les escales.

Habituellement dans les aéroports équipés d'un réseau souterrain de distribution de carburant sous pression appelé oléoréseau, la connexion entre une des prises de l'oléréseau et la bouche d'avitaillement d'un aéronef en stationnement se fait au moyen d'un oléoserveur qui comporte :

- un flexible amont équipé de supports roulants, déployé au sol pour être connecté à l'oléoréseau,
- des dispositifs de comptage, de filtration et de dégazage montés sur un châssis qui est garé à proximité de l'aile de l'aéronef pendant les opérations de ravitaillement en carburant,
- un ou plusieurs flexibles avals raccordés à la bouche d'avitaillement de l'aéronef.

L'optimisation de l'utilisation des parkings aéronefs et la minimisation des temps d'escale entraîne la circulation d'un grand nombre de personnes et de véhicules autour des aéronefs.

Le flexible amont est particulièrement gênant pour la circulation des personnes et interdit le passage des véhicules. Il représente une source potentielle d'incidents graves.

De plus étant donné que ce flexible est stocké sur l'oléoserveur en dehors de ses périodes d'utilisation et qu'il doit être déroulé par un opérateur il n'est pas possible d'augmenter significativement sa longueur. La prise de l'oléoréseau et le système de connexion du flexible amont sont donc situés au milieu de la zone de circulation intense et constitue une source supplémentaire d'incidents.

Une solution pour réduire les risques d'accidents consiste à faire cheminer les canalisations non pas au sol mais au dessus des zones de circulation au moyen de supports fixes ou mobiles. Pour le ravitaillement des aéronefs des solutions mettant en oeuvre cette technique sont décrites dans les demandes de brevets FR 2 704 201 et FR 2 733 732, elles consistent respectivement à faire cheminer la canalisation sur la passerelle d'embarquement des passagers et sur un portique mobile. De telles solutions sont lourdes à mettre en pratique, coûteuses, voire irréalisables dans de nombreux cas.

### EXPOSE DE L'INVENTION

La présente invention a précisément pour but de réduire ces risques d'accidents en proposant une canalisation pour le transport de fluides et/ou d'énergie dont la hauteur est faible par rapport à la hauteur d'une canalisation cylindrique conventionnelle et dont les formes sont adaptées au passage des véhicules et à la circulation des personnes.

La canalisation de l'invention trouve son application sur les aéroports, les chaussées, les chantiers, dans les usines, les locaux d'habitation, les bureaux, les hôpitaux pour le transport de fluides tels que de l'eau, des gaz sous pression, de la vapeur d'eau, pour le transport de l'électricité, de signaux électroniques, de signaux optiques et aussi pour le transport d'énergie mécanique notamment au moyen d'un câble reliant un dispositif moteur à un récepteur. Elle trouve également son application dans la manutention de produits liquides ou pulvérulents disponibles dans des réservoirs ou à partir de réseaux sous pression. A titre d'exemple on peut citer la livraison de carburants dans les stations services, le ravitaillement d'aéronefs sur les aéroports, le chargement et le dépotage de produits agro-alimentaires.

A cette fin la présente invention propose une canalisation comportant un corps plein dans lequel sont aménagés plusieurs conduits longitudinaux disposés côte à côte, présentant ensemble une section de passage S, caractérisée en ce que les axes longitudinaux desdits conduits sont situés dans un plan et le corps plein présente une section transversale extérieure en forme sensiblement d'un trapèze dont la hauteur est inférieure à la hauteur d'une canalisation de section circulaire présentant une section de passage approximativement égale à S.

Selon un mode préférentiel de réalisation, la canalisation de l'invention est réalisée en matériaux souples permettant son enroulement sur un touret.

Selon une autre caractéristique, la canalisation de l'invention comporte en plus des moyens de détection de la rupture du corps plein.

Selon une autre caractéristique de l'invention, les moyens de détection de la rupture du corps plein comportent au moins un fil conducteur de l'électricité disposé parallèlement aux conduits longitudinaux et un dispositif électronique de détection de la rupture dudit fil.

Selon une autre caractéristique, la canalisation de l'invention comporte en plus, des tuyaux disposés à l'intérieur des conduits longitudinaux pour le transport d'un fluide.

Selon une autre caractéristique, la canalisation de l'invention comporte en plus, des moyens de transport d'énergie disposés à l'intérieur des conduits longitudinaux.

Selon une autre caractéristique, la canalisation de l'invention comporte en plus, des moyens de transport d'énergie disposés à l'intérieur d'au moins un des conduits longitudinaux, de manière à assurer le transport simultané d'au moins une énergie et d'au moins un fluide.

Selon une autre caractéristique, la canalisation de l'invention ayant des extrémités amont et aval elle comporte de plus, montées de manière étanche aux dites extrémités, des boîtes de raccordement respectivement amont et aval, munies de moyens de liaison à des équipements respectivement amont et aval, les conduits longitudinaux mettant en communication les parties intérieures desdites boîtes de raccordement.

Selon une autre caractéristique, la canalisation de l'invention ayant des extrémités amont et aval, elle comporte de plus, montées de manière étanche aux dites extrémités, des boîtes de raccordement respectivement amont et aval, munies de moyens de liaison à des équipements respectivement amont et aval, les tuyaux disposés à l'intérieur des conduits longitudinaux mettant en communication les parties intérieures desdites boîtes de raccordement.

Selon une autre caractéristique, la canalisation de l'invention ayant des extrémités amont et aval, elle comporte de plus, aux dites extrémités, des boîtes de raccordement respectivement amont et aval, munies de moyens de liaison à des dispositifs respectivement amont et aval, les moyens de transport d'énergie reliant les dispositifs amont et aval par l'intermédiaire desdits moyens de liaison.

Dans une application particulière la canalisation de l'invention est utilisée pour le ravitaillement en carburant des aéronefs au sol, l'équipement amont étant un oléoréseau et l'équipement aval un système oléoserveur.

## BREVE DESCRIPTION DES DESSINS

L'invention sera mieux comprise à l'aide de la description qui va suivre en référence aux dessins annexés dans lesquels :

- la figure 1 représente schématiquement en coupe transversale une canalisation comportant cinq conduits longitudinaux.
- la figure 2 représente en coupe transversale partielle une canalisation munie de tuyaux circulant dans les conduits longitudinaux.

- la figure 3 représente en vue de dessus et en coupe partielle une canalisation comportant une boîte de raccordement à chacune de ses extrémités.
- la figure 4 représente schématiquement l'extrémité d'une canalisation de transport d'énergie électrique.
- la figure 5 représente schématiquement une canalisation munie d'un câble de détection de coupure.
- la figure 6 représente schématiquement une installation de ravitaillement en carburant des aéronefs.
- la figure 7 représente vue en coupe la canalisation de l'invention utilisée pour le ravitaillement en carburant des aéronefs.

## EXPOSE DETAILLE DE L'INVENTION

D'une manière générale la canalisation de l'invention est utilisée, posée sur le sol, pour le transport de fluides et/ou d'énergies.

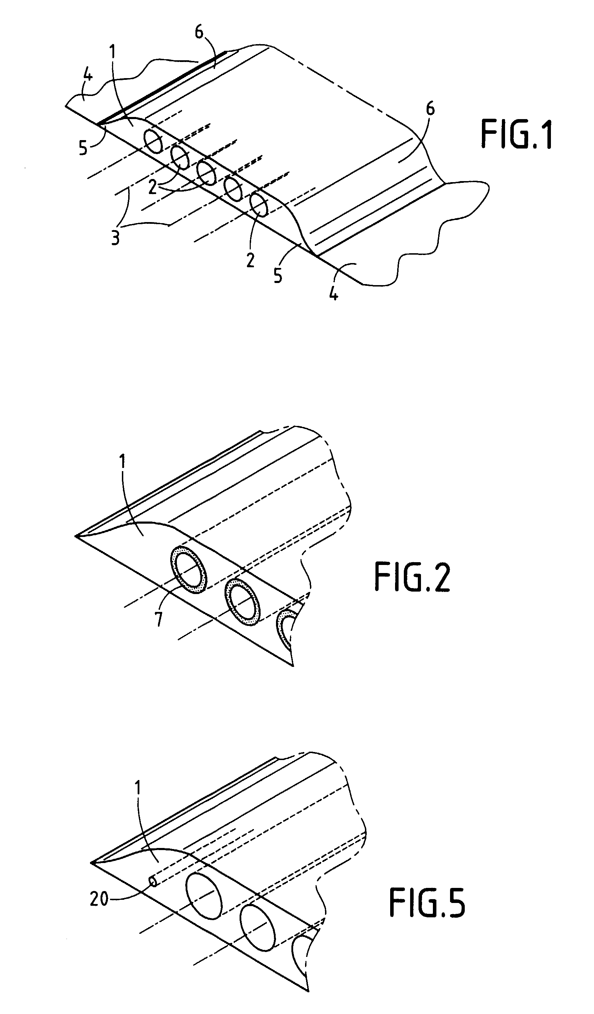

Selon un mode particulier de réalisation représenté sur la figure 1, la canalisation de l'invention comporte un corps 1 plein dans lequel sont aménagés cinq conduits 2 longitudinaux, cylindriques de même section circulaire de diamètre d, disposés côte à côte. Ces conduits 2 longitudinaux présentent une section totale de passage égale à S. Ils sont disposés de manière à ce que leurs axes 3 longitudinaux soient sensiblement situés dans un plan, pour former une nappe. La section transversale extérieure du corps 1 a sensiblement la forme d'un trapèze isocèle dont la grande base repose sur le sol 4. De plus les bords 5 inférieurs du corps 1 sont effilés et les bords 6 supérieurs sont arrondis. Si on compare la hauteur h de la canalisation de l'invention à la hauteur H d'une canalisation cylindrique présentant une section circulaire de passage sensiblement égale à S et dont la paroi a une épaisseur e, on a la relation $h = H/\sqrt{5}$ si e est petit devant h. De façon plus générale si le nombre de conduits longitudinaux est égal à n on a la relation $h = H/\sqrt{n}$. Ainsi la hauteur de la canalisation de l'invention est inférieure à celle d'une canalisation cylindrique conventionnelle. Grâce à cette faible hauteur combinée avec les formes particulières du corps, l'effet d'obstacle au passage de véhicules et à la circulation des personnes est très réduit. La hauteur h de la canalisation de l'invention peut être adaptée à un besoin particulier en jouant sur le nombre des conduits longitudinaux tout en conservant une section de passage constante.

Selon un autre mode de réalisation représenté figure 2 la canalisation de l'invention comporte dans chaque conduit 2 longitudinal un tuyau 7 dans lequel circule le fluide transporté par la canalisation. Grâce à cette disposition le corps 1 et les tuyaux 7 peuvent être réalisé avec des matériaux différents adaptés à leur fonction propre recherchée. Par exemple le matériau choisi pour la réalisation du corps 1 sera très résistant du point de vue mécanique et le matériau choisi pour la réalisation des tuyaux 7 sera résistant chimiquement au produit transporté.

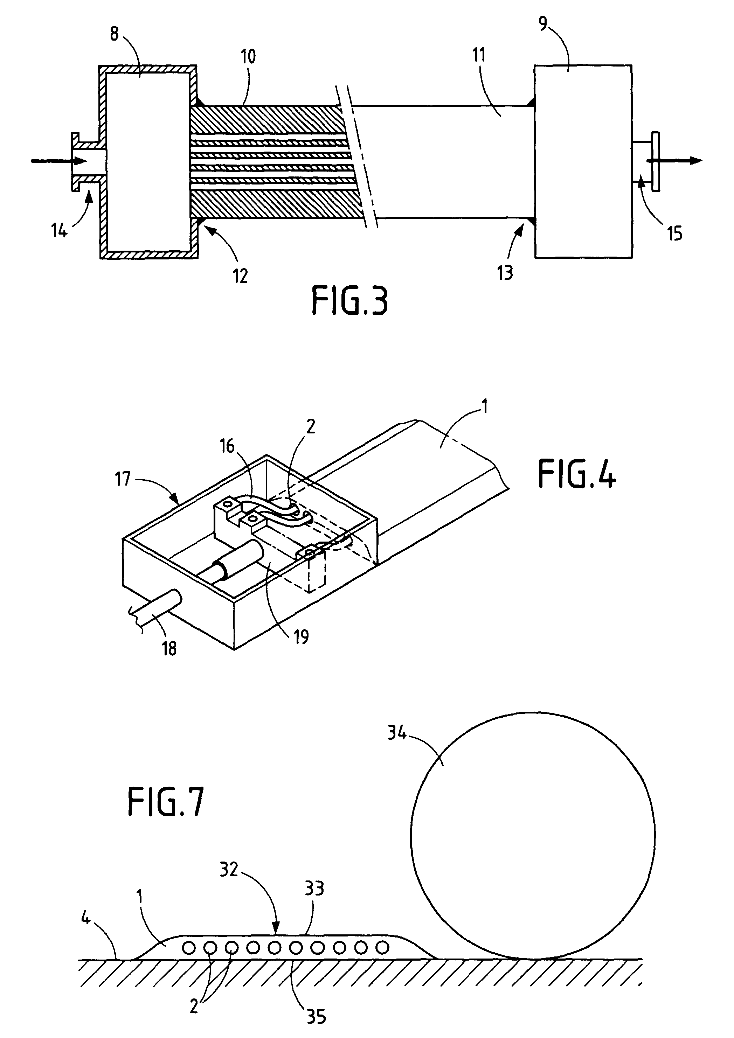

La canalisation de l'invention peut être avantageusement complétée comme indiqué sur la figure 3 par des boites 8 et 9 de raccordement, montées respectivement à ses extrémités 10 et 11 amont et aval. Des joints 12 et 13 assurent l'étanchéité entre le corps 1 et les boites 8 et 9 respectivement. En plus les boites de raccordement 8 et 9 sont munies respectivement de moyens 14 et 15 de raccordement de type conventionnel à des équipements respectivement amont et aval non représentés sur la figure 3. Grâce à ses moyens 14 et 15 de raccordement la canalisation de l'invention est utilisable avec des équipements conventionnels sans modification desdits équipements. A titre d'exemple on peut citer le raccordement d'un marteau piqueur comme équipement aval, à un générateur d'air comprimé comme équipement amont, les moyens de raccordements étant dans ce cas des raccords symétriques.

De tels équipements sont utilisés sur de nombreux chantiers d'usines et de travaux publics dans des zones où circulent de nombreux engins roulants et de nombreuses personnes intervenantes. Grâce aux caractéristiques de l'invention les risques d'accidents sont minimisés.

Selon un autre mode de réalisation représenté figure 4 la canalisation de l'invention comporte des câbles 16 électriques qui cheminent dans les conduits 2 et à chacune de ses extrémités une boîte 17 de raccordement dont une seule est représentée. Les câbles 16 sont raccordés à l'intérieur de la boîte 17 à une barrette 19 de connexion sur laquelle est également relié un câble 18 électrique de gros diamètre.

Le corps 1 de la canalisation sera avantageusement réalisé en matériau souple afin de permettre son enroulement sur un touret, pour son stockage et sa manutention il pourra également être renforcé par incorporation de fibres textiles ou métalliques en fonction des besoins.

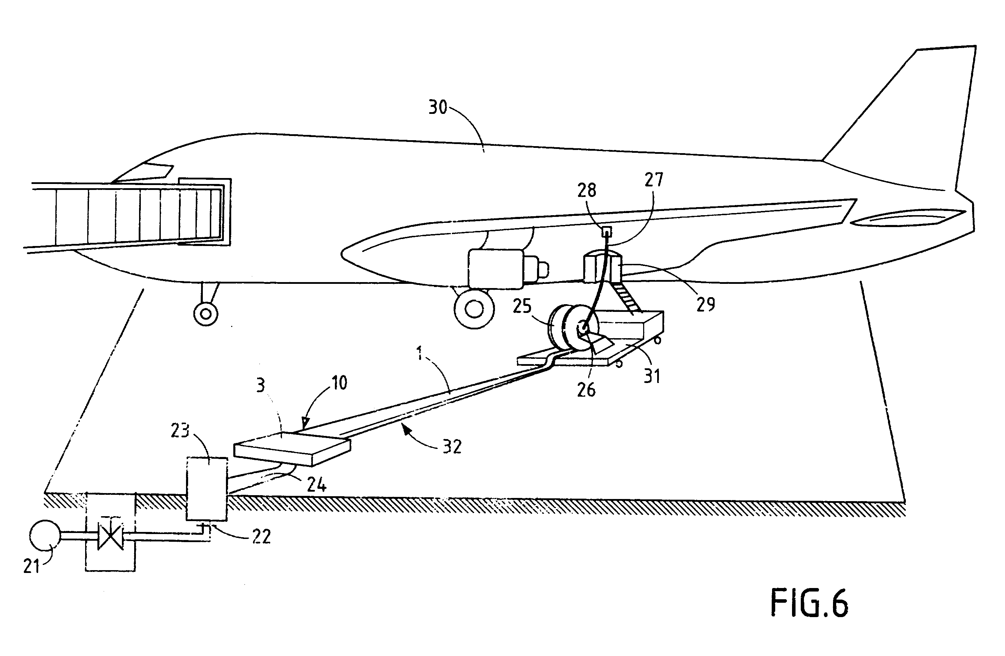

Selon le mode de réalisation représenté figure 5, la canalisation de l'invention comporte inséré longitudinalement dans le corps 1 un fil 20 conducteur de l'électricité relié à un dispositif électronique non représenté qui délivre un signal représentatif de la coupure du fil 20. En cas de rupture de la canalisation de l'invention le signal délivré par le dispositif électronique est utilisé pour déclencher des opérations de mise en sécurité de l'installation dans laquelle la canalisation est utilisée.

EXEMPLE

Une application particulièrement intéressantes de l'invention, représentée schématiquement figure 6, est le ravitaillement en carburant d'un aéronef 30 en stationnement dans un aéroport, à partir d'une connexion 22 d'un oléoréseau 21 à proximité duquel sont installés des moyens 23 de filtration, de dégazage et de comptage du carburant raccordés à la connexion 22 qui comportent une sortie 24.

Cette installation comprend en outre :

- une canalisation 32 selon l'invention, qui comporte à son extrémité 10 amont une boite 8 de raccordement reliée à la sortie 24 des moyens 23 de filtration, de dégazage et de comptage du carburant, un corps 1 plein dans lequel sont aménagés une pluralité de conduits longitudinaux dans lesquels sont disposés des tuyaux de circulation de carburant et à son extrémité aval une boite de raccordement non représentée munie d'une sortie,

- un enrouleur 25 auquel est relié la sortie de la boite de raccordement aval, sur lequel est partiellement enroulé la canalisation 32, et muni d'une sortie 26 axiale,

- un flexible 27 relié à la sortie 26 axiale de l'enrouleur 25 et connecté à la bouche 28 d'avitaillement de l'aéronef 30,

- un chariot 31 motorisé qui supporte l'enrouleur 25 et une nacelle 29 élévatrice qui permet à un opérateur de connecter le flexible 27 à la bouche 28 d'avitaillement.

La canalisation 32 dont le corps 1 est réalisé en matériau souple comporte 10 conduits longitudinaux de diamètre 45 mm pour le passage des tuyaux de circulation du carburant, soit une section de passage d'environ 80 cm2. Elle présente une section en forme sensiblement d'un trapèze d'une hauteur de 60 mm dont la grande et la petite base mesurent respectivement 750 mm et 500 mm. De plus les angles supérieurs de ce trapèze sont arrondis et les angle inférieurs effilés. Grâce à sa faible hauteur et à son profil particulier cette canalisation 32 qui repose directement sur le sol est franchissable sans difficulté par un véhicule roulant et ne constitue pas un obstacle important au passage des personnes.

A titre de comparaison une canalisation conventionnelle de forme cylindrique circulaire présentant une section de passage de l'ordre de 80 cm2 aurait une hauteur de 120 mm. Si on tient compte de la hauteur des supports roulant indispensables avec ce type de canalisation l'encombrement en hauteur effectif de l'ensemble canalisation et supports dépasse 350 mm.

La figure 7 représente en vue en coupe transversale la canalisation de l'invention utilisée dans une installation de ravitaillement en carburant telle que représentée figure 6. Sur cette figure la canalisation 32 apparaît posée sur le sol 4 à côté d'une roue d'un engin mobile représentée par un cercle sensiblement à la même échelle que la canalisation 32. Le corps 1 plein de la canalisation 32 comporte 10 conduits 2 longitudinaux disposés en nappe parallèlement aux bases 33 et 35 du trapèze qui limite extérieurement la section du corps 1.

Il apparaît clairement sur cette figure 7 que la canalisation est franchissable sans difficulté par un engin mobile.

En plus de son encombrement réduit, qui permet la circulation des véhicules et diminue les risques d'accident au voisinage de l'aéronef, la canalisation de l'invention présente d'autres avantages propres à cette application parmi lesquels on peut citer :

- la possibilité d'éloigner le point de connexion à l'oléoréseau de la bouche d'avitaillement de l'aéronef du fait que la canalisation ne crée plus un obstacle infranchissable,
- la possibilité de déporter les moyens de filtration, de dégazage et de comptage dans une zone à faible circulation donc hors risque,
- la diminution de l'encombrement du système oléoserveur qui n'a plus à supporter les moyens de filtration, de dégazage et de comptage.

**Revendications**

1. Canalisation comportant un corps (1) plein dans lequel sont aménagés plusieurs conduits (2) longitudinaux disposés côte à côte, présentant ensemble une section de passage S, caractérisée en ce que les axes (3) longitudinaux desdits conduits (2) sont situés dans un plan et le corps (1) plein présente une section transversale extérieure en forme sensiblement d'un trapèze dont la hauteur est inférieure à la hauteur d'une canalisation de section circulaire présentant une section de passage approximativement égale à S.

2. Canalisation selon la revendication 1 caractérisée en ce qu'elle est réalisée en matériaux souples permettant son enroulement sur un touret.

3. Canalisation selon la revendication 1 ou 2 caractérisée en ce qu'elle comporte en plus des moyens de détection de la rupture du corps plein.

4. Canalisation selon la revendication 3 caractérisée en ce que les moyens de détection de la rupture du corps plein comportent au moins un fil (20) conducteur de l'électricité disposé parallèlement aux conduits (2) longitudinaux et un dispositif électronique de détection de la rupture dudit fil (20).

5. Canalisation selon l'une des revendications 1 à 4 caractérisée en ce qu'elle comporte en plus, des tuyaux (7) disposés à l'intérieur des conduits (2) longitudinaux pour le transport d'un fluide.

6. Canalisation selon l'une des revendications 1 à 4 caractérisée en ce qu'elle comporte en plus, des moyens (16) de transport d'énergie disposés à l'intérieur des conduits (2) longitudinaux.

7. Canalisation selon l'une des revendications 1 à 5 caractérisée en ce qu'elle comporte en plus, des moyens (16) de transport d'énergie disposés à l'intérieur d'au moins un des conduits (2) longitudinaux, de manière à assurer le transport simultané d'au moins une énergie et d'au moins un fluide.

8. Canalisation selon l'une des revendications 1 à 4 caractérisée en ce que, ayant des extrémités (10, 11) amont et aval, elle comporte de plus, montées de manière étanche aux dites extrémités (10 et 11), des boîtes (8, 9)de raccordement respectivement amont et aval, munies de moyens (14, 15) de liaison à des équipements respectivement amont et aval, les conduits (2) longitudinaux mettant en communication les parties intérieures desdites boîtes (8, 9) de raccordement.

9. Canalisation selon la revendication 5 caractérisée en ce que, ayant des extrémités amont et aval, elle comporte de plus, montées de manière étanche aux dites extrémités, des boîtes de raccordement respectivement amont et aval, munies de moyens de liaison à des équipements respectivement amont et aval, les tuyaux (7) disposés à l'intérieur des conduits (2) longitudinaux mettant en communication les parties intérieures desdites boîtes de raccordement.

10. Canalisation selon la revendication 6 ou 7 caractérisée en ce que, ayant des extrémités amont et aval, elle comporte de plus, montées de manière étanche aux dites extrémités, des boîtes de raccordement respectivement amont et aval, munies de moyens (19) de liaison à des dispositifs respectivement amont et aval, les moyens (16) de transport d'énergie reliant les dispositifs amont et aval par l'intermédiaire desdits moyens (19) de liaison.

11. Application de la canalisation selon la revendication 8 ou 9 au ravitaillement en carburant des aéronefs au sol, l'équipement amont étant un oléoréseau (21) et l'équipement aval un système oléoserveur.

FIG.1

FIG.2

FIG.5

FIG.3

FIG.4

FIG.7

FIG.6

EP 0 895 012 A1

Office européen des brevets

**RAPPORT DE RECHERCHE EUROPEENNE**

Numéro de la demande

EP 98 40 1884

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | AU 32276 78 A (IRATHANE SYSTEMS INC.) 19 juillet 1979 * revendications 1-10; figures 1-5 * | 1,5,6 | F16L9/19 F16L11/22 |
| Y | DE 85 11 546 U (FESTO KG) 5 juin 1985 * revendications 1-10; figures 1-6 * | 1,5,6 | |
| A | EP 0 459 738 A (POLYMER APPLICATIONS LTD) 4 décembre 1991 * abrégé; figures 1-3 * | 1 | |
| A | FR 2 179 904 A (DAIMLER-BENZ AG) 23 novembre 1973 * revendications 1-11; figures 1-3 * | 1 | |
| A | FR 2 577 650 A (ENTREPRISE J. FAYOLLE & FILS) 22 août 1986 * abrégé; figures 1-4 * | 1 | |

DOMAINES TECHNIQUES RECHERCHES (Int.Cl.6)

F16L

Le présent rapport a été établi pour toutes les revendications

| Lieu de la recherche | Date d'achèvement de la recherche | Examinateur |
|---|---|---|
| LA HAYE | 9 novembre 1998 | Angius, P |

9